# EUROPEAN PATENT APPLICATION

(11) **EP 3 381 767 A1**
(43) Date of publication of application: **03.10.2018**
(21) Application number: 17163088.2
(22) Date of filing: 27.03.2017
(51) Int. Cl.: B61L 25/02, B61L 15/00, G01D 5/347

(54) **METHOD FOR CHECKING THE FUNCTIONALITY OF A THREE PHASE TACHOMETER ON BOARD A RAIL VEHICLE**

(71) Applicant: Bombardier Transportation GmbH, 10785 Berlin (DE)
(72) Inventor: Budgifvars, Göran, SE-163 51 Spånga (SE)
(74) Representative: Bjerkéns Patentbyrå KB (Gävle)

(57) **Abstract**

A method for checking the functionality of a three-phase tachometer (1) on board a rail vehicle is carried out for such a tachometer configured to measure distances and directions of possible movements carried out by the vehicle during a time period of a no power mode of the vehicle in which after the vehicle has come to standstill, electric energy supply to an electric system (2) of the vehicle including an automatic supervising system (3) of the vehicle configured to supervise the function of the components of the electric system has been switched off. The method comprises the step of varying the intensity of light emitted by at least light emitter/emitters (6-8) associated with light detector/detectors (9-11) detecting light in said no power mode. The influence of the light intensity variation upon the light detected by the respective light detector is measured and a malfunction of the tachometer is registered if a light detector checked do not react upon said light intensity variation. This way of proceeding will discover a malfunction of the tachometer in form of all three light detectors failing irrespectively of the failure modes thereof.

## Description

### TECHNICAL FIELD OF THE INVENTION AND BACKGROUND ART

The present invention relates to a method for checking the functionality of a three-phase tachometer onboard a rail vehicle, said tachometer being configured to measure distances and directions of possible movements carried out by the vehicle during a time period of a no power mode of the vehicle in which after the vehicle has come into a stand still electric energy supply to an electric system of the vehicle including an automatic supervising system of the vehicle configured to supervise the function of components of the electric system has been switched off, said three-phase tachometer having three light emitters associated with a light detector each and a member arranged between the light emitters and the light detectors and moving upon rotation of an axle rotating upon movement of the vehicle so as to open a window letting light from each light emitter through to hit the associated light detector over a half of each increment of a predetermined distance of the movement of said member and prevent light to reach the light detector over the other half of said distance increment of the movement of the member with the three windows of the light detectors being mutually displaced by 120°,
the method comprising the following steps carried out during each said time period of a no power mode of the vehicle:
a) checking whether the light detectors detect light from the respective light emitter, and
b) registering a malfunction of the tachometer if the result obtained in step a) is that all or no one of the light detectors detect light,
as well as an electric system for operation of a rail vehicle according to the preamble of the appended claim directed to such an electric system.

The rail vehicle may be any type of track-bound vehicle driven on railways.

It is of great importance to know if such a rail vehicle brought in said no power mode has moved during the time period, which may be of a length of hours or several days, it has been taken out of operation by being transferred to this mode, i.e. with the electric energy supply to the electric system of the vehicle including the automatic supervising system (ATP = Automatic Train Protection is the name used for rail vehicles) and means (electric motor) for propulsion of the vehicle switched off. If the rail vehicle has not moved during the time period of no power mode it will be possible to nearly immediately upon switching on the propulsion system of the vehicle drive away with the full speed allowed for the railway section where the rail vehicle is located (in this disclosure called fast start up), since said automatic supervising system will have all information it had from balises at the moment when the train came to a standstill stored in a memory and available to be used when driving away. However, if the rail vehicle has been moved more than a predetermined distance, such as 1 m or a couple of m, during said time period of no power mode it may not be excluded that the vehicle has passed a balise and missed to receive important information therefrom which it had received from the balise through an antenna when the supervising system is switched on. Additionally, supervision of brake curves could be erroneously offset if the ATP uses wrong positioning data. Such movement would be a so-called cold movement which may be achieved by towing the rail vehicle or pushing it or bumping into it by another rail vehicle. Has the rail vehicle moved more than said predetermined distance during the time period of no power mode the start of the rail vehicle after switching on the electric system thereof again is much more complicated, since the driver of the rail vehicle first has to feed in a lot of data into the control unit computer of the vehicle and wait to get a permission from a railway control central to drive away and then drive slowly to the next balise for receiving necessary signal information therefrom (in this disclosure called slow start up). It is of course desired to avoid this way to proceed when not necessary, which is the reason for having a said three-phase tachometer powered by at least one electric battery for detecting if the rail vehicle has moved more than said predetermined distance during the time period of no power mode or not. There are extremely rigorous safety demands put on railway systems making it vital to know if said tachometer may be trusted. If the functionality thereof is not perfect the information given by the tachometer has to be disregarded and it has to be assumed that the vehicle has been moved more than said predetermined distance during the time period of no power mode and a slow start of the vehicle has to be carried out when the electric system thereof is started up again.

This is the main reason for carrying out a method for checking the functionality of the tachometer and detecting if the tachometer is working properly and the information given thereby with respect to so-called cold movements may be relied on. Another reason for carrying out a method of this type is that it is of general interest to know that the tachometer functions properly when starting the rail vehicle irrespectively whether a cold movement has taken place or not.

However, the present inventor has realised that to carry out a method as defined in the introduction is not enough for excluding with certainty every risk of not detecting that a malfunction of the tachometer in fact exists. This is because there are two obvious failure modes of the light detectors:
1) to always indicate that they detect light even if there is no light or
2) to never indicate that they detect light even if there is light.

This means that when the rail vehicle is at standstill, the output signal of a three-phase tachometer functioning properly is exactly what may be expected in the state of the tachometer in which all three light detectors are failing but one or two of them indicates that they detect light. This means that the tachometer will not register any cold movement even if such a cold movement is carried out during the time period of no power mode of the rail vehicle, so that it may not be discriminated between an absence of movement and presence of movement during said time period if all three detectors of the tachometer is failing and together define a possible state of a functioning tachometer.

### SUMMARY OF THE INVENTION

The object of the present invention is to provide a method and an electric system of the type defined in the introduction being improved with respect to such methods and electric systems already known by addressing the above problem understood by the inventor.

This object is with respect to the method obtained by providing such a method with the features listed in the characterizing part of appended patent claim 1.

By varying the intensity of light emitted by at least the light emitter/emitters associated with the light detector/detectors detecting light and measuring the influence of the light intensity variation upon the light detected by the respective light detector it may be discovered if the light detector or detectors detecting light when the tachometer is in a state it may have when functioning properly is failing. It is then enough to show that one light detector is not reacting upon a light intensity variation and accordingly fails for registering a malfunction of the tachometer and not trusting the tachometer at all and requiring a future slow start of the rail vehicle when switching on the electric energy supply to the electric system again. Thus, if a malfunction of the tachometer has not been detected by carrying out said light intensity variation and the tachometer does not measure any cold movement during the time period of no power mode of the vehicle this information may then be trusted and the start-up of the vehicle may then be a said fast start up.

According to an embodiment of the invention the light intensity variation in step c) is carried out by switching off the respective light emitter. It is then of course also possible to again switch it on and repeat this and measuring the length of light pulses and absence of light pulses detected by a respective detector for determining if the detector functions as it shall.

According to another embodiment of the invention the light intensity variation in step c) is carried out by gradually altering the intensity of the light emitted by the respective light emitter.

According to another embodiment of the invention the functionality of said tachometer is checked before starting up said automatic supervising system of the electric system of the vehicle. If it is shown that no malfunction of the tachometer may be established at that time it may be assumed that would any cold movements have taken place during the time period of no power mode the tachometer would have recorded such a movement.

According to another embodiment of the invention the functionality of said tachometer is checked every time the rail vehicle comes to standstill and the electric energy supply to the automatic supervising system has been switched off. Especially this embodiment combined with the previous embodiment add extra confidence to the method.

According to another embodiment of the invention the functionality of the tachometer is checked with intervals during the time period the rail vehicle is in said no power mode, which adds even more confidence to the method, and the functionality of the tachometer may then according to another embodiment of the invention be checked at least once an hour, with said intervals being 10-60 minutes, 20-50 minutes or 20-40 minutes as long as the vehicle is in said no power mode.

According to another embodiment of the invention the method comprises the following additional steps carried out each time the rail vehicle is moving during said time period of a no power mode provided that the light detector/detectors checked by carrying out step c) reacted correctly upon said light intensity variation:
f) comparing the frequencies and the mutual phase shifts of the light detected by the three light detectors during this movement, and
g) registering a good function of the tachometer when all the light detectors detect light with pulses of the same frequency and a mutual phase shift of 120° and otherwise a malfunction of the tachometer.
This means that if any of the three light detectors is failing this will be detected during a cold movement of the vehicle and it will then be decided that the tachometer may not be trusted and a said slow start up of the rail vehicle has to be carried out when leaving the no power mode. However, if a good function of the tachometer is registered a fast start up of the vehicle may be carried out if the vehicle has not been moved longer than said predetermined distance during the time period of said no power mode.

The object of the invention is with respect to the electric system obtained by providing said electric system with the features listed in the characterizing part of the independent patent claim for the electric system.

According to an embodiment of the invention the electric system has a member supplying electric energy to the light emitters being separate from a member supplying electric energy to the light detectors. It is by this obtained that the voltage supplied to the light detectors may be kept constant and uninfluenced of the voltage supplied to the light emitters, so that it is ensured that possible variations of the voltage to the light emitters may always be detected by the light detectors if these are functioning properly, and if a light detector is "locked" in a high state this will be detected since variation of the voltage to the associated will not influence the signal from the detector.

The invention also relates to a computer program, a computer-readable medium, an electronic control unit and a rail vehicle according to the appended claims directed thereto.

Further advantages as well as advantageous features of the invention will appear from the description following below.

### BRIEF DESCRIPTION OF THE DRAWINGS

With reference to the appended drawings below follows a specific description of embodiments of the invention cited as examples.

In the drawings:
- Fig 1: is a schematic view illustrating the principle of a three-phase tachometer of the type arranged in an electric system for operation of a rail vehicle according to the present invention,
- Fig 2: is an exploded view illustrating how a three-phase tachometer according to Fig 1 may be arranged on a rail vehicle,
- Fig 3: is a simplified view illustrating the operation principle of one phase of the three-phase tachometer,
- Fig 4: is a graph illustrating the light pulses R, S, T versus time t of a three-phase tachometer according to Fig 1, and
- Fig 5: is a schematic view illustrating an electronic control unit for implementing a method according to the invention.

### DETAILED DESCRIPTION OF EMBODIMENTS OF THE INVENTION

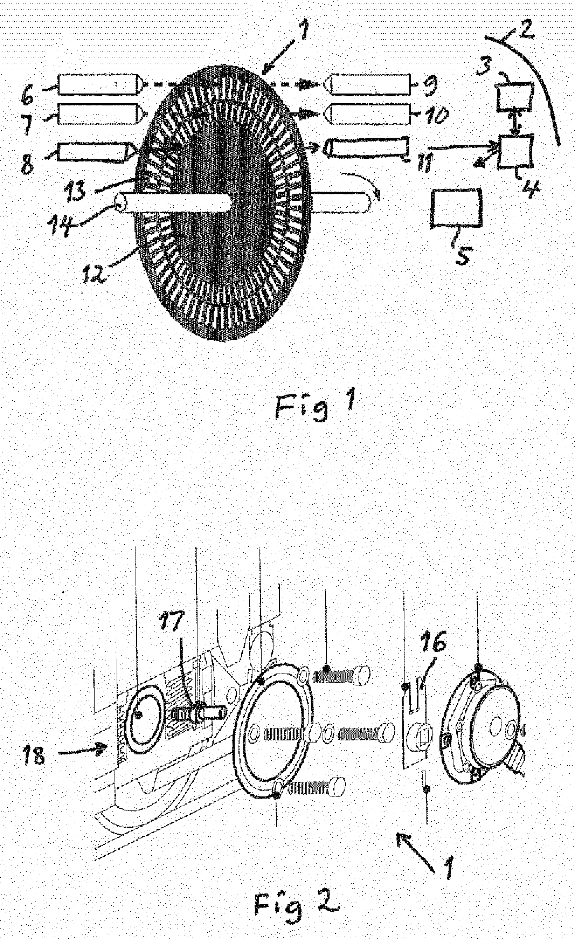

A three-phase tachometer 1 being a part of an electric system 2 for operation of a rail vehicle is schematically illustrated in Fig 1. The electric system has also an automatic supervising system indicated by a box 3 configured to supervise the function of components of the electric system as well as a control unit 4 configured to transfer the electric system to a no power mode by disconnecting electric energy supply to at least the major part of the electric system including the automatic supervising system 3 and means 5, i.e. one or more electric motors, for propulsion of the vehicle when the vehicle has come to still stand and is taken out of operation for a period of time, such as over night.

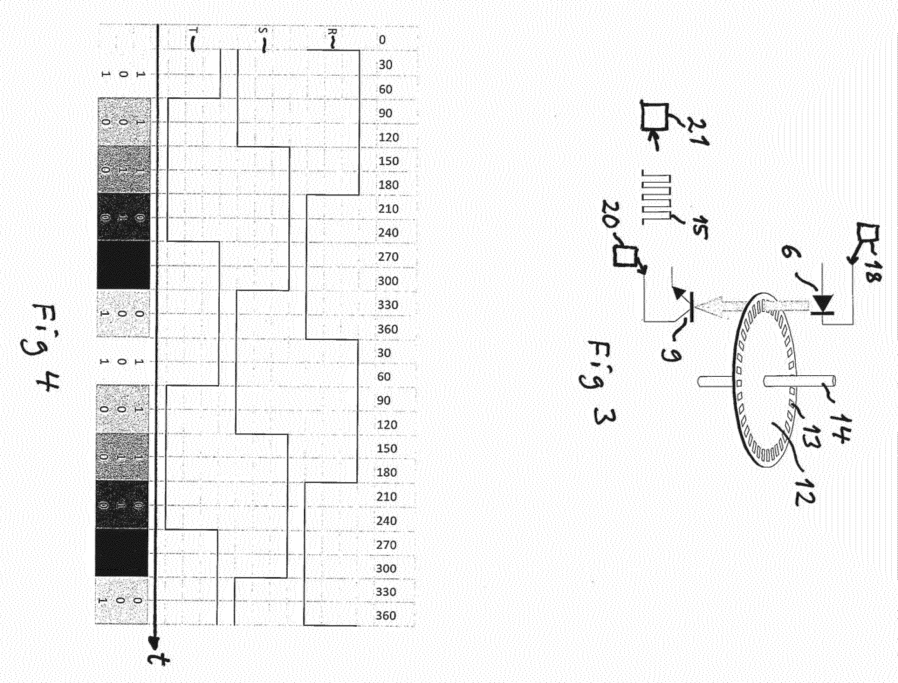

The three-phase tachometer has three light emitters 6-8, such as in the form of light emitting diodes, configured to continuously emit light and each associated with a light detector 9-11, such as photo transistors. A member 12 in the form of a disc provided with through-holes 13 is arranged between the light emitters and the light detectors and connected to a shaft 14 connected to an axle rotating upon movement of the vehicle for rotating the disc 12 so as to through the through-holes 13 open a window letting light from each light emitter 6-8 through to hit the associated light detector 9-11 over a half of each increment of a predetermined distance of the movement of the disc and prevent light to reach the light detector over the other half of said distance increment of the movement of the disc 12. The light emitters and light detectors are positioned so that three consecutive windows of the light detectors are displaced 120° with respect to each other. Thus, when the disc 12 rotates each light detector 9 will detect light pulses 15 separated by a zero signal of identical length of time as illustrated in Fig 3 for one phase.

Fig 2 shows schematically how the tachometer 1 may through a driving fork 16 be connected to a driving pin 17 connected to the wheel axle of the rail vehicle 18.

Fig 4 illustrates the appearance of the light signals detected for the three phases R, S, T versus time t when the tachometer functions properly and the rail vehicle is moving. The states "high" and "low" of the respective detector are shown by 1 and 0, respectively, under the graph. It appears that always at least one light detector is "high" and detects light. Thus, when the rail vehicle is taken out of operation and the control unit 4 transfers the electric system to a no power mode after the rail vehicle has come to still stand one or two light detectors will detect light depending upon the position of disc 12 provided that the light detectors do not fail. The electric system is provided with a three-phase tachometer for being able to detect so-called cold movements, i.e. movements of the vehicle carried out in said no power mode, and the tachometer is for that sake supplied with electric energy from electric batteries through members 19, 20 being separate for the light emitters and the light detectors as indicated in Fig 3.

It is of vital importance to be able to with certainty determine whether the information delivered by the tachometer may be trusted or not. As mentioned further above there are two obvious failure modes of the detectors, to always indicate that they detect light (even if there is no light) or to never indicate that they detect light (even if there is light). This means that it may not be excluded that the rail vehicle comes to still stand and a combination of the signals detected by the light detectors is the same as if all light detectors would function properly but in fact all three detectors are failing. Would that be the case and the rail vehicle moves during the time period of no power mode of the vehicle the tachometer will deliver the same information as if the rail vehicle has not moved at all. This could then result in a decision to start the rail vehicle according to said fast start up in spite of correctly starting it through said slow start up and then possibly without any important information from the train signal system. However, the present invention solves this problem in the following way:

In case the combination of the light signals detected by the light detectors makes it impossible that all light detectors are functioning properly, which is the case if no one or all light detectors detect light, a malfunction of the tachometer is registered. In case the combination of the signals makes it possible that all light detectors functions properly the control unit 4 controls electric energy supply to the light emitters so that the intensity of the light emitted by at least the light emitter/emitters associated with the light detector/detectors detecting light is varied and a member 21 measures the influence of this light intensity variation upon the light detected by the respective light detector. This light intensity variation may be a switching on and switching off of the light emitters and/or a gradual altering of the intensity of the light emitted by the respective light emitter. This means that a possible failure of the light detector/detectors detecting light at still stand of the vehicle may be discovered. This would then be registered as a malfunction of the tachometer. The function of at least one light detector not receiving light may not be checked in this state of standing still.

However, would no such failure of the light detectors be discovered this means that a future cold movement of the rail vehicle may be detected by the tachometer, and during such a cold movement the light detector/detectors that is/are clearly functioning will show if the other detector/detectors is/are functioning due to the fact that the three light signals outputted by the detectors shall always have the same frequency and a mutual phase shift of 120°.

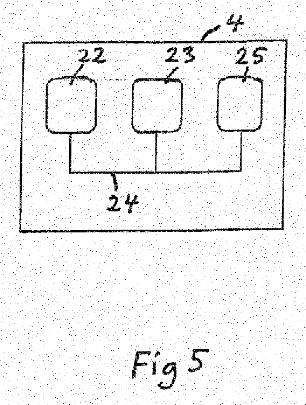

Computer program code for implementing a method according to the invention is with advantage included in a computer program which can be read into the internal memory of a computer, e.g. the internal memory of an electronic control unit of a motor vehicle. Such a computer program is with advantage provided via a computer program product comprising a data storage medium which can be read by a computer and which has the computer program stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type. Fig. 5 illustrates very schematically an electronic control unit 4 comprising an execution means 22, e.g. a central processor unit (CPU), for execution of computer software. The execution means 22 communicates with a memory 23, e.g. of the RAM type, via a data bus 24. The control unit 4 comprises also a non-transitory computerreadable medium 25, e.g. in the form of a flash memory or a memory of the ROM, PROM, EPROM or EEPROM type. The execution means 22 communicates with the computer-readable medium 25 via the data bus 24. A computer program comprising computer program code for implementing a method according to the invention is stored on the computer-readable medium 25.

The invention is of course in no way restricted to the embodiments described above, since many possibilities for modifications thereof are likely to be obvious to one skilled in the art without having to deviate from the scope of invention defined in the appended claims.

Furthermore, tachometers with more phases than three may of course be handled in a similar way.

## Claims

1. A method for checking the functionality of a three-phase tachometer (1) onboard a rail vehicle (18), said tachometer being configured to measure distances and directions of possible movements carried out by the vehicle during a time period of a no power mode of the vehicle in which after the vehicle has come to standstill, electric energy supply to an electric system (2) of the vehicle including an automatic supervising system (3) of the vehicle configured to supervise the function of components of the electric system has been switched off, said three-phase tachometer having three light emitters (6-8) associated with a light detector (9-11) each and a member (12) arranged between the light emitters and the light detectors and moving upon rotation of an axle (14) rotating upon movement of the vehicle so as to open a window letting light from each light emitter through to hit the associated light detector over a half of each increment of a predetermined distance of the movement of said member (12) and prevent light to reach the light detector over the other half of said distance increment of the movement of the member with the three windows of the light detectors being mutually displaced by 120°, the method comprising the following steps carried out during each said time period of a new power mode of the vehicle:
a) checking whether the light detectors (9-11) detect light from the respective light emitter (6-8), and
b) registering a malfunction of the tachometer (1) if the result obtained in step a) is that all or no one of the light detectors (9-11) detect light,
***characterized* in that** the method comprises the following further steps carried out would the result obtained in step a) be that one or two light detectors detect light:
c) varying the intensity of light emitted by at least the light emitter/emitters (6-8) associated with the light detector/detectors (9-11) detecting light,
d) measuring the influence of said light intensity variation upon the light detected by the respective light detector (9-11), and
e) registering a malfunction of the tachometer (1) if a light detector (9-11) checked by carrying out step c) do not react upon said light intensity variation.

2. A method according to claim 1, ***characterized* in that** the light intensity variation in step c) is carried out by switching off the respective light emitter (6-8).

3. A method according to claim 1, ***characterized* in that** the light intensity variation in step c) is carried out by gradually altering the intensity of the light emitted by the respective light emitter (6-8).

4. A method according to any of the preceding claims, ***characterized* in that** the functionality of said tachometer (1) is checked before starting up said automatic supervising system (3) of the electric system (2) of the vehicle.

5. A method according to any of the preceding claims, ***characterized* in that** the functionality of said tachometer (1) is checked every time the rail vehicle comes to stand still and the electric energy supply to the automatic supervising system (3) has been switched off.

6. A method according to any of the preceding claims, ***characterized* in that** the functionality of said tachometer (1) is checked with intervals during the time period the rail vehicle is in said no power mode.

7. A method according to claim 6, ***characterized* in that** the functionality of said tachometer (1) is checked at least once an hour, with said intervals being 10-60 minutes, 20-50 minutes or 20-40 minutes as long as the vehicle is in said no power mode.

8. A method according to any of the preceding claims, ***characterized* in that** it comprises the following additional steps carried out each time the rail vehicle (18) is moving during said time period of a no power mode provided that the light detector/detectors (9-11) checked by carrying out step c) reacted correctly upon said light intensity variation:
f) comparing the frequencies and the mutual phase shifts of the light detected by the three light detectors (9-11) during this movement, and
g) registering a good function of the tachometer (1) when all the light detectors detect light with pulses (15) of the same frequency and a mutual phase shift of 120° and otherwise a malfunction of the tachometer.

9. An electric system for operation of a rail vehicle comprising
• an automatic supervising system (3) configured to supervise the function of components of the electric system,
• a control unit (4) configured to transfer the electric system (2) to a no power mode by disconnecting electric energy supply to at least the major part of the electric system including said automatic supervising system and means for propulsion of the vehicle when the vehicle (18) has come to stand still and is taken out of operation for a period of time, and
• a three-phase tachometer (1) having three light emitters (6-8) associated with a light detector (9-11) each and a member (12) arranged between the light emitters and the light detectors and moving upon rotation of an axle (14) rotating upon movement of the vehicle so as to open a window letting light from each light emitter through to hit the associated light detector over a half of each increment of a predetermined distance of the movement of said member and prevent light to reach the light detector over the other half of said distance increment of the movement of the member with the three windows of the light detectors displaced 120° with respect to each other,
in which the tachometer (1) is configured to measure distances and directions of possible movements carried out by the vehicle during said period of time of no power mode, and said control unit (4) being configured to each time the electric system has been transferred to said no power mode check the status of the tachometer by checking whether said light detectors (9-11) detect light emitted by the light emitters (6-8) and to register a malfunction of the tachometer when no one or all three light detectors at the same time detects light, ***characterized* in that** the control unit (4) is configured to extend said checking of the status of the tachometer in case one or two light detectors (9-11) detect light by controlling at least each light emitter (6-8) associated with a light detector detecting light to vary the intensity of the light emitted thereby, that the electric system comprises a measuring member (21) configured to measure the influence of said light intensity variation upon the light detected by the respective light detector (9-11) and send the result of the measurement to the control unit, and that the control unit (4) is configured to register a malfunction of the tachometer if a light detector detecting light do not detect a change of intensity of the light detected.

10. An electric system according to claim 9, ***characterized* in that** it has a member (19) supplying electric energy to said light emitters (6-8) being separate from a member (20) supplying electric energy to said light detectors (9-11).

11. A computer program comprising instructions which, when the computer program is executed by a computer, causes the computer to carry out the method according to any of claims 1-8.

12. A computer-readable medium comprising instructions, which when executed by a computer, cause the computer to carry out the method according to any of claims 1-8.

13. An electronic control unit (4) comprising an execution means (22), a memory (23) connected to the execution means and a computer-readable medium (25) which is connected to the execution means and on which the computer program code of a computer program according to claim 11 is stored.

14. A rail vehicle, ***characterized* in that** it is provided with an electric system (2) according to claim 9 or 10 or an electronic control unit (4) according to claim 13.
